# EUROPÄISCHE PATENTSCHRIFT

(11) **EP 0 739 079 B1**
(45) Veröffentlichungstag und Bekanntmachung des Hinweises auf die Patenterteilung: **01.12.1999**
(21) Anmeldenummer: 96105550.6
(22) Anmeldetag: 04.04.1996
(51) Int. Cl.: H02K 9/06, F04D 25/02, F04D 25/16

(54) **Selbstgekühlte elektrische Maschine**
Auto-ventilated electrical machine
Machine électrique avec ventilation intégrée

(30) Priorität: 21.04.1995 DE 19514766
(43) Veröffentlichungstag der Anmeldung: 23.10.1996
(73) Patentinhaber: SIEMENS AKTIENGESELLSCHAFT, 80333 München (DE)
(72) Erfinder: Wagner, Herbert, Dipl.-Ing. (FH), 97616 Bad Neustadt (DE)

(56) Entgegenhaltungen:
- DE-C- 706 213
- PATENT ABSTRACTS OF JAPAN vol. 010, no. 168 (E-411), 14.Juni 1986 & JP-A-61 018328 (MATSUSHITA DENKI SANGYO KK), 27.Januar 1986,
- DATABASE WPI Section EI, Week 8549 Derwent Publications Ltd., London, GB; Class X11, AN 85-309204 XP002008869 & SU-A-1 159 115 (MINING ELEC EQUIP) , 30.Mai 1985
- PATENT ABSTRACTS OF JAPAN vol. 006, no. 021 (E-093), 6.Februar 1982 & JP-A-56 141743 (HITACHI LTD), 5.November 1981,

## Beschreibung

Die Erfindung betrifft eine selbstgekühlte elektrische Maschine mit mindestens einem an dem einen Wellenende der Läuferwelle angeordneten Lüfterrad.

Eine solche Maschine ist durch die DE-C 36 41 096 bekannt. Arbeitet eine solche Maschine mit konstanter oder zumindest annähernd konstanter Drehzahl, dann kann das Lüfterrad entsprechend der für die Kühlung der Maschine notwendigen Kühlluftmenge dimensioniert werden. Wird die Maschine dagegen mit unterschiedlichen Drehzahlen betrieben, dann ist keine optimale Auslegung des Lüfterrades mehr möglich. Wird nämlich der Lüfter für eine ausreichende Kühlung bei einer niedrigen Drehzahl der Maschine ausgelegt, dann weist er relativ große Abmessungen auf. Dies führt bei hohen Betriebsdrehzahlen der Maschine zu einer starken Geräuschbildung und auch zu hohen Luftreibungsverlusten. Aus diesem Grunde werden in der Regel bei solchen Maschinen Lüfter mit einem eigenen Antrieb eingesetzt. Diese Maschinen sind dann fremdbelüftet.

Die JP-A-61018328 beschreibt eine elektrische Maschine mit einem an die Welle direkt gekoppelten Lüfterrad. Außerdem ist ein kleines Lüfterrad an der Motorwelle vorgesehen, das durch Reibungskraft der Motorwelle in Drehung versetzt wird. Wenn die elektrische Maschine stoppt, wird der erste Lüfter, der direkt mit der Welle verbunden ist, ebenfalls angehalten, aber das kleine Lüfterrad läuft durch das Auslaufen weiter. Dabei wird warme Luft zwischen einem Verbraucher und der elektrischen Maschine mittels kleiner Schaufeln des kleinen Lüfterrades nach außen gefördert. Dieses kleine Lüfterrad dient somit der Nachwärmeabfuhr. Bei hohen Betriebsdrehzahlen der Maschine entsteht ebenfalls eine Geräuschbildung und es kommt zu hohen Luftreibungsverlusten.

Die JP-A-56141743 beschreibt eine elektrische Maschine mit einem auf einer Motorwelle angeordneten Lüfterrad. Dabei ist eine drehrichtungsabhängige Kupplung so angebracht, daß sie eingreift, wenn die Motorwelle mit kleiner Drehzahl im Gegenuhrzeigersinn umläuft und sich bei hoher Drehzahl im Uhrzeigersinn löst. Die Drehrichtung wird dabei durch den Ständerstrom vorgegeben. Für die Kühlung bei niederen Drehzahlen sind direkt am Rotor der elektrischen Maschine Lüfterflügel angeordnet. Dabei ist aufgrund der Anordnung des Lüfterrades am Rotorblechpaket als auch durch das zusätzliche Lüfterrad mit Kupplung eine größere Dimensionierung der gesamten Antriebseinheit erforderlich.

Der Erfindung liegt die Aufgabe zugrunde, eine selbstgekühlte elektrische Maschine so weiterzubilden, daß auch bei einem weiten Drehzahlbereich der Maschine eine ausreichende Kühlung ohne die Nachteile einer starken Geräuschbildung und hoher Verluste möglich ist. Dabei wird eine Reduzierung der Bauvolumina der elektrischen Maschine angestrebt.

Die Lösung der gestellte Aufgabe gelingt nach der Erfindung dadurch, daß ein weiteres Lüfterrad vorgesehen ist, welches in definierter Abhängigkeit von der Drehzahl mit dem ersten Lüfterrad koppelbar ist, wobei das erste Lüfterrad fest mit der Läuferwelle verbunden ist und das zweite Lüfterrad drehbar auf der Läuferwelle angeordnet ist. Mit Hilfe eines solchen zu- und abschaltbaren zweiten Lüfterrades kann bei einer niederen Drehzahl der Maschine eine ausreichende Kühlluftmenge gefördert werden. Bei einer hohen Drehzahl reicht die Fördermenge eines Lüfterrades aus. Dieses Lüfterrad kann so dimensioniert werden, daß im Zusammenhang mit der hohen Drehzahl weder eine starke Geräuschentwicklung einhergeht noch hohe Luftreibungsverluste auftreten.

Eine selbsttätige, von der Drehzahl der Maschine abhängige Zu- und Abschaltung des entsprechenden Lüfterrades wird dadurch erreicht, daß die beiden Lüfterräder über ein drehzahlabhängig wirkendes Koppelglied miteinander koppelbar sind, wobei das erste Lüfterrad fest mit der Läuferwelle verbunden ist und das zweite Lüfterrad drehbar auf der Läuferwelle angeordnet ist. Hierbei ist es vorteilhaft, wenn die beiden Lüfterräder über eine fliehkraftabhängig wirkende Kupplung miteinander verbunden sind.

Eine platzsparende Anordnung der Lüfterräder ergibt sich dadurch, daß beide Lüfterräder als Radiallüfterräder ausgebildet und konzentrisch zueinander angeordnet sind, wobei das fest mit der Läuferwelle verbundene erste Lüfterrad radial innen liegt und das drehbar auf der Läuferwelle gelagerte zweite Lüfterrad das erste Lüfterrad umschließt.

Bei einer solchen konzentrischen Anordnung der beiden Lüfterräder kann die Kupplung vorteilhafterweise in radialer Richtung zwischen den beiden Lüfterrädern angeordnet sein. Damit entspricht die Funktionsrichtung einer solchen Kupplung gleichzeitig ihrer konstruktiven Anordnung an den Lüfterrädern.

Eine fliekraftabhängige Koppelung der beiden Lüfterräder wird auf konstruktiv einfache Weise dadurch erreicht, daß auf der Rückseite der Deckscheibe des ersten Lüfterrades mindestens ein federbelastetes Mitnahmeelement in einer Führung angeordnet ist, welches in eine am Außenumfang der Nabe des zweiten Lüfterrades vorgesehene Vertiefung eingreift.

Günstige Strömungsverhältnisse und damit geringe Strömungsverluste lassen sich dadurch erzielen, daß beide Radiallüfterräder gleiche Schaufelzahlen aufweisen und im gekoppelten Zustand in Umfangsrichtung so ausgerichtet sind, daß ihre Schaufeln in radialer Richtung fluchten.

Die radiale Flucht der Schaufeln während des Betriebes der beiden Lüfterräder wird dadurch sichergestellt, daß das Mitnahmeelement und die Vertiefung so angeordnet sind, daß bei einem Eingriff der beiden Teile die Schaufeln der beiden Radiallüfterräder in radialer Richtung fluchten.

Eine platzsparende Lagerung des zweiten Lüfterrades ergibt sich dadurch, daß das zweite Lüfterrad mit seiner Nabe auf dem Außenring eines mit seinem Innenring auf der Läuferwelle sitzenden Wälzlagers aufgezogen ist.

Anhand eines in der Zeichnung dargesellten Ausführungsbeispieles wird die Erfindung nachfolgend näher beschrieben.
Es zeigt:

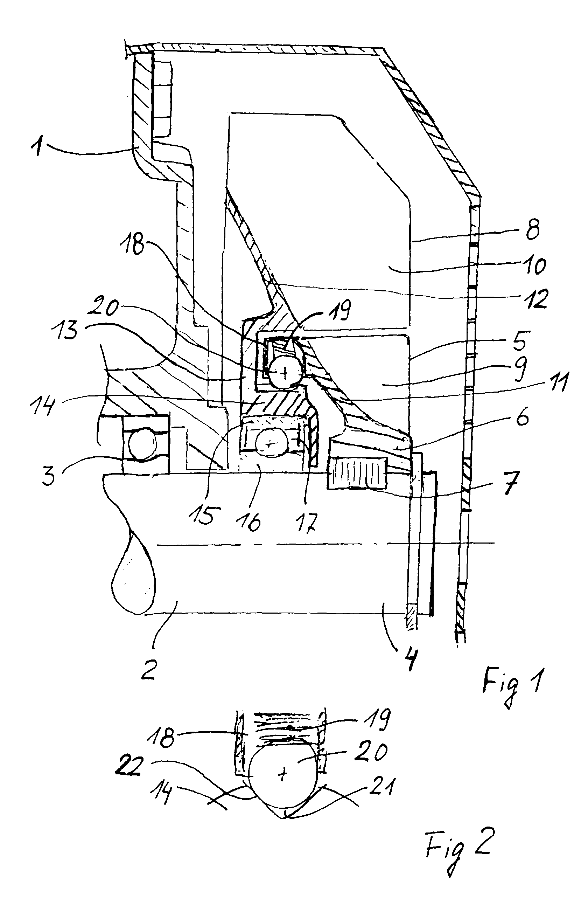

- FIG 1: die Lüfterseite einer elektrischen Maschine im Schnitt,
- FIG 2: eine Einzelheit einer fliehkraftabhängigen Kupplung.

Mit 1 ist das lüfterseitige Lagerschild einer elektrischen Maschine bezeichnet. In diesem Lagerschild 1 ist die Läuferwelle 2 der Maschine mittels eines Kugellagers 3 drehbar gelagert. Auf das aus dem Lagerschild 1 herausragende Wellenende 4 der Läuferwelle 2 ist ein erstes Radiallüfterrad 5 mit seiner Lüfternabe 6 aufgesteckt und durch eine Paßfeder 7 drehfest mit der Läuferwelle 2 verbunden.

Konzentrisch zu dem ersten Radiallüfterrad 5 ist ein zweites Radiallüfterrad 8 vorgesehen, welches das erste Radiallüfterrad 5 umschließt, wobei die Schaufelteilung, d.h. die Schaufelzahl des zweiten Radiallüfterrades 8 mit der Schaufelzahl des ersten Radiallüfterrades 5 übereinstimmt. Damit können die beiden Lüfteräder 5 und 8 in Umfangsrichtung so ausgerichtet werden, daß ihre Schaufeln 9 und 10 in radialer Richtung miteinander fluchten. Auch die Deckscheiben 11 und 12 der beiden Lüfterräder 5 und 8 sind in ihrem radialen Verlauf so gestaltet und so zueinander ausgerichtet, daß sie praktisch der Deckscheibe eines aus den beiden ineinandergefügten Lüfterrädern bestehenden einzelnen Lüfterades entsprechen.

Das zweite Radiallüfterrad 8 weist eine über eine radiale Zwischenwand 13 mit seiner Deckscheibe 12 verbundene Nabe 14 auf. Die Nabe 14 ist auf den Außenring 15 eines mit seinem Innenring 16 auf der Läuferwelle 2 sitzenden Wälzlagers 17 aufgezogen. Damit kann sich das zweite Lüfterrad 8 frei drehen.

Auf der Rückseite der Deckscheibe 11 des ersten Lüfterrades 5 ist eine Führung 18 ausgebildet, in welcher ein durch eine Feder 19 belastete Kugel 20 angeordnet ist. Die Kugel 20 ist somit in der Führung 18 radial verschiebbar gehalten. Durch die Feder 19 wird die Kugel 20 gegen die Nabe 14 gedrückt und rastet in eine am Umfang der Nabe 14 vorgesehene Vertiefung 21 ein. Damit ist das zweite Radiallüfterrad 8 an das erste Radiallüfterrad 5 angekoppelt und wird von diesem mitgenommen, so daß sich beide Lüfterräder 5 und 8 zusammen mit der Läuferwelle 2 drehen. Die Vertiefung 21 weist kontinuierlich ansteigende Flanken 22 auf, so daß die Kugel 20 leicht aus der Vertiefung 21 herausgleiten und auch umgekehrt wieder in die Vertiefung 21 hineingleiten kann. Es können über den Umfang der Deckscheibe 11 verteilt mehrere Führungen 18 vorgesehen sein. Dementsprechend sind dann auch an der Nabe 14 mehrere Vertiefungen 21 vorgesehen. Anstelle einer Kugel 20 kann auch ein anders gestalteter Körper Verwendung finden, wobei dessen mit der Vertiefung in Eingriff gelangende Seite entsprechend kugelig oder gerundet ausgebildet ist.

Läuft die Maschine mit einer relativ niederen Drehzahl, dann ist der zweite Radiallüfter 8 über die in die Vertiefung eingerastete Kugel 20 mit dem ersten Radiallüfter 5 gekuppelt und wird von diesem in Drehrichtung mitgenommen. Die beiden Radiallüfter 5 und 8 wirken somit wie ein einzelner Radiallüfter mit entsprechend großen Schaufeln.

Wird die Drehzahl der Maschine erhöht, dann steigt damit auch die auf die Kugel 20 wirkende Fliehkraft. Sobald die Fliehkraft die von der Feder 19 auf die Kugel 20 ausgeübte Andrückkraft übersteigt, bewegt sich die Kugel 20 in der Führung 18 nach radial außen und gleitet aus der Vertiefung 21. Damit ist die Kupplung zwischen den beiden Radiallüftern 5 und 8 gelöst und es wird nur noch der erste Radiallüfter 5, dessen Schaufeln 9 kleiner als die Schaufeln 10 des zweiten Radiallüfters 8 bemessen sind , von der Läuferwelle 2 angetrieben. Wegen der höheren Drehzahl vermag der erste Radialüfter 5 die für die Kühlung der Maschine notwendige Kühlluftmenge zu fördern. Ein solch kleiner Radiallüfter entwickelt auch bei hohen Drehzahlen keine störenden Geräusche und auch die Luftreibungsverluste sind wesentlich niedriger als bei einem Radiallüfter mit großen Schaufeln.

Durch entsprechende Dimensionierung der Feder 19 kann jeweils eine gewünschte Drehzahl oder zumindest ein entsprechend enger Drehzahlbereich vorgegeben werden, bei dem einerseits die Entkoppelung des zweiten Radiallüfters 8 von dem ersten Radiallüfter 5 erfolgt. Andererseits aber auch wieder eine selbsttätige Ankoppelung des zweiten Radiallüfters 8 an den ersten Radiallüfter 5 erfolgt, wenn die Maschine von einer hohen Betriebsdrehzahl auf eine niedrige Betriebsdrehzahl herunter gesteuert wird.

## Patentansprüche

1. Selbstgekühlte elektrische Maschine mit mindestens einem an dem einen Wellenende (4) der Läuferwelle (2) der Maschine angeordneten Lüfterrad (5), **dadurch gekennzeichnet**, daß ein weiteres Lüfterrad (8) vorgesehen ist, welches in definierter Abhängigkeit von der Drehzahl mit dem ersten Lüfterrad (5) koppelbar ist, wobei das erste Lüfterrad (5) fest mit der Läuferwelle (2) verbunden ist und das zweite Lüfterrad (8) drehbar auf der Läuferwelle angeordnet ist.

2. Maschine nach Anspruch 1,
**dadurch gekennzeichnet,**
daß die beiden Lüfterräder (5 und 8) über ein drehzahlabhangig wirkendes Koppelglied (19;20) miteinander koppelbar sind.

3. Maschine nach Anspruch 2,
**dadurch gekennzeichnet,**
daß die beiden Lüfterräder (5 und 8) über eine fliehkraftabhängig wirkende Kupplung (19;20) miteinander verbunden sind.

4. Maschine nach Anspruch 3,
**dadurch gekennzeichnet,**
daß beide Lüfterräder als Radiallüfterräder (5 und 8) ausgebildet und konzentrisch zueinander angeordnet sind, wobei das fest mit der Läuferwelle (2) verbundene erste Lüfterrad (5) radial innen liegt und das drehbar auf der Lauferwelle (2) gelagerte zweite Lüfterrad (8) das erste Lüfterrad (5) umschließt.

5. Maschine nach Anspruch 3 und 4,
**dadurch gekennzeichnet,**
daß die fliehkraftabhängig wirkende Kupplung (19;20) in radialer Richtung zwischen den beiden Lüfterrädern (5 und 8) angeordnet ist.

6. Maschine nach Anspruch 5,
**dadurch gekennzeichnet**,
daß auf der Rückseite der Deckscheibe (11) des ersten Lüfterrades (5) mindestens ein federbelastetes Mitnahmeelement (20) in einer Führung (18) angeordnet ist, welches in eine am Außenumfang der Nabe (14) des zweiten Lüfterrades (8) vorgesehene Vertiefung (21) eingreift.

7. Maschine nach einem der Ansprüche 4-6,
**dadurch gekennzeichnet**,
daß beide Radiallüfterräder (5 und 8) gleiche Schaufelzahlen aufweisen und im gekoppelten Zustand in Umfangsrichtung so ausgerichtet sind, daß ihre Schaufeln (9 und 10) in radialer Richtung fluchten.

8. Maschine nach Anspruch 6 und 7,
**dadurch gekennzeichnet**,
daß das Mitnahmeelement (20) und die Vertiefung (21) so angeordnet sind, daß bei einem Eingriff der beiden Teile (20;21) die Schaufeln (9 und 10) der beiden Radiallüfterräder (5 und 8) in radialer Richtung fluchten.

9. Maschine nach einem der vorhergehenden Ansprüche,
**dadurch gekennzeichnet**,
daß das zweite Lüfterrad (8) mit seiner Nabe (14) auf dem Außenring (15) eines mit seinem Innenring (16) auf der Läuferwelle (2) sitzenden Wälzlagers (17) aufgezogen ist.

## Claims

1. Self-cooled electrical machine having at least one fan impeller (5) arranged on one shaft end (4) of the rotor shaft (2) of the machine, characterised in that there is provided a further fan impeller (8) which can be coupled to the first fan impeller (5) in defined dependence on the speed, with the first fan impeller (5) being connected to the rotor shaft (2) in a fixed manner and the second fan impeller (8) being arranged rotatably on the rotor shaft.

2. Machine according to claim 1, characterised in that the two fan impellers (5 and 8) can be coupled to each other by way of a coupling element (19; 20) which acts in a speed-dependent manner.

3. Machine according to claim 2, characterised in that the two fan impellers (5 and 8) are connected to each other by way of a coupling (19; 20) which acts in a centrifugal-force-dependent manner.

4. Machine according to claim 3, characterised in that both fan impellers are constructed as radial-flow fan impellers (5 and 8) and are arranged concentrically with respect to each other, with the first fan impeller (5) which is connected to the rotor shaft (2) in a fixed manner lying radially on the inside and the second fan impeller (8) which is mounted rotatably on the rotor shaft (2) surrounding the first fan impeller (5).

5. Machine according to claims 3 and 4, characterised in that the coupling (19; 20) which acts in a centrifugal-force-dependent manner is arranged in the radial direction between the two fan impellers (5 and 8).

6. Machine according to claim 1, characterised in that on the rear side of the cover disc (11) of the first fan impeller (5), there is arranged in a guide (18) at least one spring-loaded entraining element (20), which engages in an indentation (21) provided on the external periphery of the hub (14) of the second fan impeller (8).

7. Machine according to one of claims 4 to 6, characterised in that both radial-flow fan impellers (5 and 8) have the same number of blades and in the coupled state are aligned in the circumferential direction in such a way that their blades (9 and 10) are in alignment in the radial direction.

8. Machine according to claim 6 and 7, characterised in that the entraining element (20) and the indentation (21) are arranged in such a way that when the two portions (20; 21) are in engagement, the blades (9 and 10) of the two radial-flow fan impellers (5 and 8) are in alignment in the radial direction.

9. Machine according to one of the preceding claims, characterised in that the second fan impeller (8) is fitted with its hub (14) on the outer ring (15) of a rolling-contact bearing (17), the inner ring (16) of which sits on the rotor shaft (2).

## Revendications

1. Machine électrique auto-refroidissante, comportant au moins une roue (5) de ventilateur montée au bout (4) de l'arbre (2) de rotor de la machine, caractérisée en ce qu'il est prévu une roue (8) de ventilateur supplémentaire qui peut être couplée à la première roue (5) de ventilateur d'une manière qui dépend de façon définie de la vitesse de rotation, la première roue (5) de ventilateur étant solidaire de l'arbre (2) de rotor et la deuxième roue (8) de ventilateur étant montée folle sur l'arbre de rotor.

2. Machine suivant la revendication 1, caractérisée en ce que les deux roues (5 et 8) de ventilateur peuvent être couplées l'une à l'autre par l'intermédiaire d'un élément (19 ; 20) de couplage agissant d'une manière qui dépend de la vitesse de rotation.

3. Machine suivant la revendication 2, caractérisée en ce que les deux roues (5 et 8) de ventilateur sont reliées l'une à l'autre par l'intermédiaire d'un accouplement (19 ; 20) agissant d'une manière qui dépend de la force centrifuge.

4. Machine suivant la revendication 3, caractérisée en ce que les deux roues de ventilateur sont réalisées en roues (5 et 8) de ventilateurs radiaux et sont montées concentriquement l'une à l'autre, la première roue (5) de ventilateur, solidaire de l'arbre (2) de rotor, se trouvant radialement à l'intérieur et la deuxième roue (8) de ventilateur, montée folle sur l'arbre (2) de rotor, entourant la première roue (5) de ventilateur.

5. Machine suivant la revendication 3 et 4, caractérisée en ce que l'accouplement (19 ; 20) agissant d'une manière qui dépend de la force centrifuge est monté dans la direction radiale entre les deux roues (5 et 8) de ventilateur.

6. Machine suivant la revendication 5, caractérisée en ce qu'il est monté dans une glissière (18), sur la face arrière du disque (11) de recouvrement de la première roue (5) de ventilateur, au moins un élément (20) d'entraînement qui est soumis à l'action d'un ressort et qui engrène dans un renfoncement (21) prévu sur le pourtour extérieur du moyeu (14) de la deuxième roue (8) de ventilateur.

7. Machine suivant l'une des revendications 4 à 6, caractérisée en ce que les deux roues (5 et 8) de ventilateurs radiaux ont de mêmes nombres de pales et, lorsqu'elles sont couplées, sont orientées dans la direction périphérique de manière que leurs pales (9 et 10) soient alignées dans la direction radiale.

8. Machine suivant la revendication 6 et 7, caractérisée en ce que l'élément (20) d'entraînement et le renfoncement (21) sont disposés de manière que, lors d'un engrènement des deux pièces (20 ; 21) les pales (9 et 10) des deux roues (5 et 8) de ventilateurs radiaux soient alignées dans la direction radiale.

9. Machine suivant l'une des revendications précédentes, caractérisée en ce que la deuxième roue (8) de ventilateur est montée par son moyeu (14) sur l'anneau (15) extérieur d'un roulement (17) à billes se tenant par son anneau (16) intérieur sur l'arbre (2) de rotor.
